# EUROPEAN PATENT APPLICATION

(11) **EP 4 443 622 A1**
(43) Date of publication of application: **09.10.2024**
(21) Application number: 24161587.1
(22) Date of filing: 05.03.2024
(51) Int. Cl.: H01M 50/209, H01M 50/224, H01M 50/242, H01M 50/249, H01M 50/273, H01M 50/276, H01M 50/30

(54) **RECHARGEABLE BATTERY PACK**

(30) Priority: 05.04.2023 KR 20230044904
(71) Applicant: Samsung SDI Co., Ltd., Yongin-si, Gyeonggi-do 17084 (KR)
(72) Inventor: KIM, Young Deok, 17084 Yongin-si (KR)
(74) Representative: Marks & Clerk LLP

(57) **Abstract**

A rechargeable battery pack includes a plurality of battery cells each having a cell vent, a pack frame configured to accommodate the battery cells and provided with a pack vent, and a pack cover coupled to the pack frame and configured to cover the battery cells, wherein the pack cover includes a first member formed of a first elongation material having a first elongation, and a second member formed of a second elongation material having a second elongation that is larger than the first elongation.

## Description

### BACKGROUND

### (a) Field

The present disclosure relates to a rechargeable battery pack.

### (b) Description of the Related Art

A rechargeable battery is a battery that repeatedly performs charging and discharging unlike a primary battery. Small-capacity secondary batteries are used in small portable electronic devices such as mobile phones, notebook computers, and camcorders. High-capacity and high-density secondary batteries are used for power or energy storage for driving motors in hybrid and electric vehicles.

The rechargeable battery may be used as a rechargeable battery module including a plurality of battery cells connected in series and/or parallel to drive a motor of, for example, a hybrid vehicle requiring relatively high energy density. For example, a rechargeable battery module stacks a plurality of battery cells provided in a number corresponding to a desired amount of power in a frame in order to implement a relatively high-output rechargeable battery module (e.g., an electric vehicle).

These rechargeable battery modules are connected in series and/or parallel within a pack frame manufactured by various methods to form a rechargeable battery pack. For example, various types of rechargeable battery modules suitable for the capacity of the rechargeable battery pack are being manufactured.

The rechargeable battery pack includes a pack frame accommodating battery cells and a pack cover (also called a top cover). The pack frame accommodates rechargeable battery modules arranged in a horizontal or vertical direction, and the pack cover is fastened to the pack frame with a fastening member and protects the rechargeable battery module from external impact.

Since the size of the rechargeable battery pack is large, the pack cover is vertically fastened to the pack frame to reinforce the rigidity of the rechargeable battery pack. The pack cover must maintain stability against the load in the vertical direction of the pack, and for this purpose, a certain distance is provided between the pack cover and vehicle parts.

The space set at this distance absorbs the vertical force such that no load is applied to the rechargeable battery pack, module, or battery cell when the vertical force is generated. The pack frame includes a pack vent including a membrane, to prevent damage to the rechargeable battery pack due to a difference in internal pressure according to altitude. The pack vent discharges the high-temperature gas discharged from cell vents in event situations.

### SUMMARY

The present disclosure provides a rechargeable battery pack capable of preventing heat propagation between battery cells.

A rechargeable battery pack includes a plurality of battery cells each having a cell vent, a pack frame configured to accommodate the battery cells and provided with a pack vent, and a pack cover coupled to the pack frame and configured to cover the battery cells, where the pack cover includes a first member formed of a first elongation material having a first elongation, and a second member formed of a second elongation material having a second elongation that is larger than the first elongation.

The pack cover may alternately include the first member and the second member along a first direction in which the battery cells are stacked.

The first member and the second member may be connected by welding or a clad metal.

The first member may be formed of a hot-dip galvanized steel sheet, and the second member may be formed of a stainless steel sheet.

The second member may be disposed above the cell vent provided in the battery cell. The second member of the pack cover may form a first distance that is a predetermined height difference with respect to the cell vent.

A first elongation range of the first member may be 5 to 28%, and a second elongation range of the second member is may be 40 to 120%. The second elongation may be set to 1.4 to 24 times of the first elongation.

The first member may be set to have a first elongation range of 5 to 28%, a tensile strength range of 750 to 1,050 Mpa, and a yield strength range of 500 to 740 Mpa.

The second member may have the tensile strength range of 1,160 to 1,900 Mpa.

A tensile strength of the second member may be higher than a tensile strength of the first member.

The tensile strength of the second member may be 1.1 to 2.6 times higher than the tensile strength of the first member.

The yield strength range of the second member may be 200 to 450 Mpa.

A yield strength of the second member may be 27 to 90% of a yield strength of the first member.

In the second member and the first member, a difference between the second elongation and the first elongation may be 12 to 115%, and a difference of the yield strength may be 50 to 540 MPa.

The pack cover may include a first non-elongation portion provided at a center in a second direction crossing the first direction, and formed of the first member having the first elongation, and the first non-elongation portion may be configured to form a maximum width in the second direction at the center in the first direction, while having a width gradually narrowing toward both ends in the first direction.

The pack cover may be fixed to the pack frame by a fastening member, and a second non-elongation portion may be formed of the first member having the first elongation around the fastening member.

At least some of the above and other features of the invention are set out in the claims.

A rechargeable battery pack according to an embodiment includes, in a pack cover, a second member formed of a second elongation material having a second elongation larger than a first elongation of a first member, such that the second member of the second elongation material closer to the battery cell is elongated at the time of a cell event and thereby the induction passage of the cell event gas may be additionally expanded. Therefore, the cell event gas is promptly guided to the pack vent through the induction passage additionally expanded due to the elongation, and accordingly heat propagation between battery cells may be prevented.

### BRIEF DESCRIPTION OF THE DRAWINGS

FIG. 1 is a perspective view of a rechargeable battery pack according to an embodiment.
FIG. 2 is a top plan view of FIG. 1.
FIG. 3 is an enlarged plan view of a portion of FIG. 2.
FIG. 4 is a cross-sectional view taken along line IV-IV of FIG. 2.
FIG. 5 is a cross-sectional view taken along line V-V by combining the pack frame of FIG. 2.

### DETAILED DESCRIPTION OF THE EMBODIMENTS

Hereinafter, the present disclosure will be described more fully hereinafter with reference to the accompanying drawings, in which embodiments of the disclosure are shown. As those skilled in the art would realize, the described embodiments may be modified in various different ways, all without departing from the scope of the present disclosure. The drawings and description are to be regarded as illustrative in nature and not restrictive. Like reference numerals designate like elements throughout the specification.

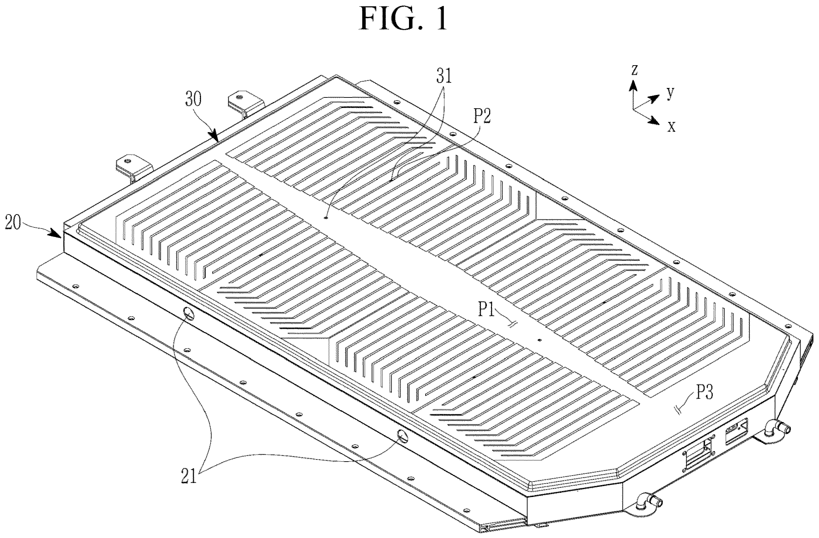

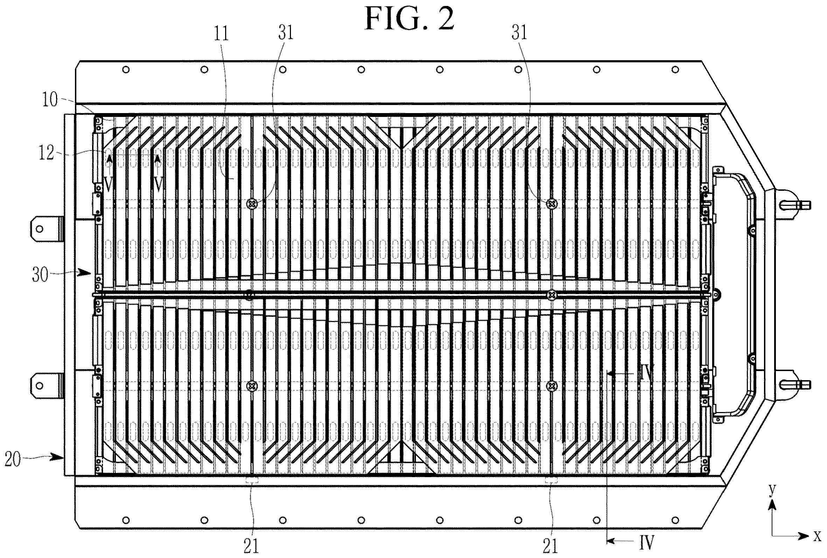

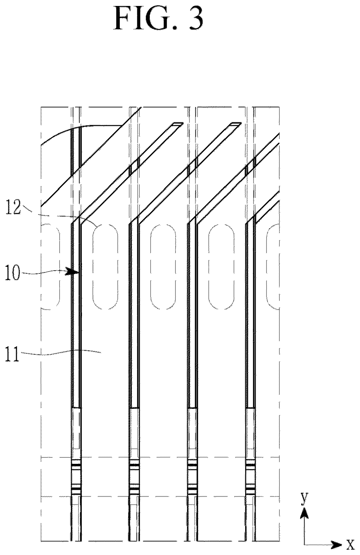

FIG. 1 is a perspective view of a rechargeable battery pack according to an embodiment. FIG. 2 is a top plan view of FIG. 1. FIG. 3 is an enlarged plan view of a portion of FIG. 2. Referring to FIG. 1 to FIG. 3, a rechargeable battery pack according to an embodiment includes a plurality of battery cells 10, a pack frame 20 configured to accommodate the battery cells 10, and a pack cover 30 coupled to the pack frame 20.

A battery cell 10 is formed of a rechargeable battery, provided with a cell vent 12 on a cap plate 11. The cell vent 12 is configured to discharge a cell event internal gas. The pack frame 20 is configured to accommodate the battery cells 10, and is provided with a pack vent 21. The pack vent 21 discharges the cell event internal gas to the outside of the pack frame 20, thereby preventing a secondary event of other battery cells 10.

The pack cover 30 covers the battery cells 10, and is coupled to the pack frame 20 by a fastening member 31. The pack cover 30 and the pack frame 20 are coupled to each other, to form a closed and sealed space, and the battery cells 10 are accommodated in and exposed from the closed and sealed space. For example, the internal gas due to the cell event is discharged to the closed and sealed space through the cell vent 12, and then may be promptly discharged to the outside through the pack vent 21.

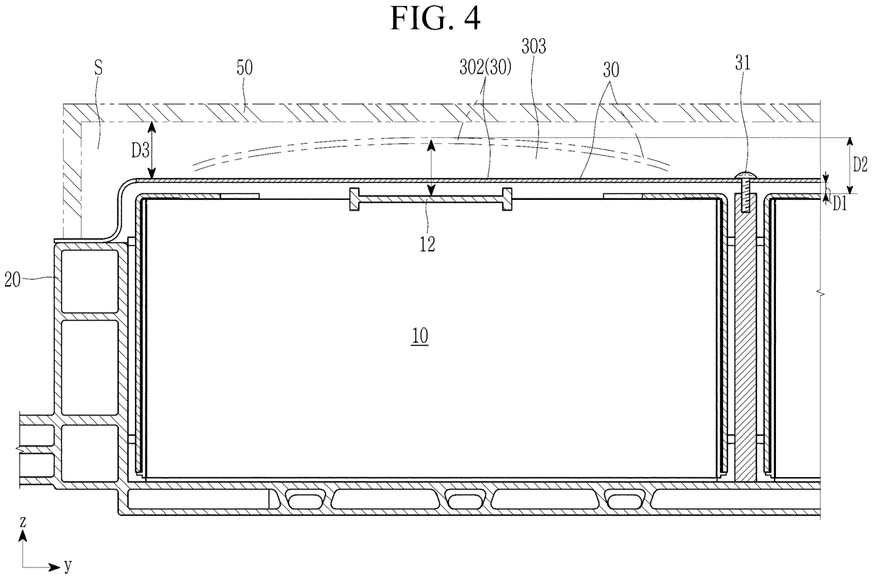

FIG. 4 is a cross-sectional view taken along line IV-IV of FIG. 2. Referring to FIG. 4, as the capacity of the battery cells 10 increases, a distance between the pack cover 30 and the battery cells 10 is gradually reduced.

For example, according to market and customer requirements, the allowable first distance D1 between the upper end of the battery cell 10 and the pack cover 30 in normal operating conditions of the rechargeable battery pack may be 4 to 15 mm. However, a second distance D2 required to maintain the performance of the rechargeable battery pack capable of responding to cell event situations may be 22 to 40 mm.

For example, a difference D2-D1 occurs between the second distance D2 required to maintain the performance of the rechargeable battery pack and the first distance D1 allowed. The allowable first distance D1 is smaller than the required second distance D2 (i.e., D2>D1).

In this case, when a cell event occurs, the cell vent 12 may be blocked by foreign substances ejected from the battery cell 10, and heat propagation may occur to the adjacent battery cells 10 due to the blocked the high temperature gas moving path.

An embodiment enables the rechargeable battery pack to operate normally even though the allowable first distance D1 is smaller than the required second distance D2 (i.e., D2>D1), and prevents heat propagation even in a cell event situation.

Referring back to FIG. 4, a space S of a third distance D3 sufficient to secure a necessary second distance D2 is provided between the pack cover 30 and the vehicle cover 50 provided in the vehicle. An embodiment is configured to cope with a cell event by utilizing the space S of the third distance D3.

Therefore, in an embodiment, when a cell event occurs, remnants of electrode plates or separators to be ejected through the cell vent 12 are prevented from being stacked on the pack cover 30 and the cell vent 12 to completely block the cell vent 12 or shrinking the space. In addition, an embodiment prevents clogging of the cell vent 12, thereby preventing flames and hot gases from being dispersed outside the cell vent 12.

An embodiment prevents the temperature of the battery cell 10 in which the event has occurred from further increasing, prevents rupture of the event battery cell 10 due to the pressure and temperature of the hot gas, and prevents heat propagation to adjacent battery cells 10.

For this purpose, the necessary second distance D2 is formed by adding a fraction (i.e., D3*x) of the third distance D3 to the allowable first distance D1 (i.e., D2 = D3*x D1). For example, x is greater than 0 and less than 1. Different elongations of the pack cover 30 are applied such that the pack cover 30 has different shapes (solid line and double-dotted line in FIG. 4) during normal operation and during abnormal operation such as a cell event.

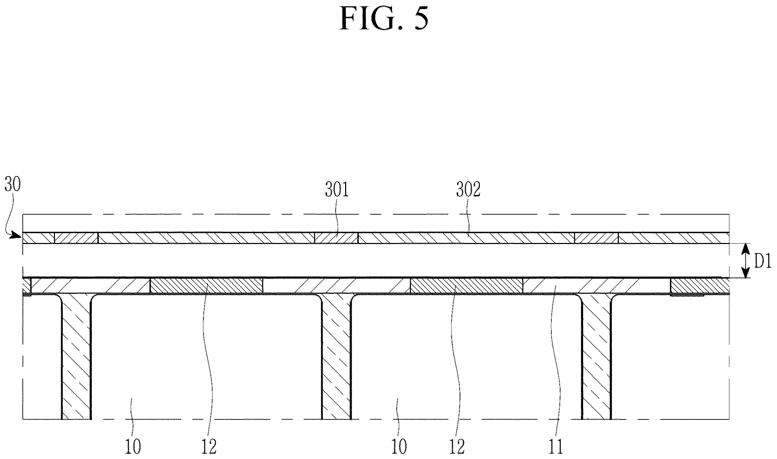

FIG. 5 is a cross-sectional view taken along line V-V by combining the pack frame of FIG. 2. Referring to FIG. 2 and FIG. 5, the pack cover 30 is formed by including a first member 301 and a second member 302. The first member 301 is formed of a first elongation material having a first elongation, and the second member 302 is formed of a second elongation material having a second elongation that is larger than the first elongation. For example, the pack cover 30 is formed of materials having different elongations.

The pack cover 30 alternately includes the first member 301 and the second member 302 along a first direction (x-axis direction) in which the battery cells 10 are stacked. At this time, the first member 301 and the second member 302 may be connected by friction welding, laser welding or a clad metal.

The first member 301 may be formed of a hot-dip galvanized steel sheet, for example, CGCHS60DP having the first elongation. The second member 302 may be formed of a stainless steel sheet, for example, SUS290 having the second elongation.

The second member 302 may be disposed above the cell vent 12 provided in the battery cell 10, such that the second member 302 may be stretched more promptly in response to the discharge pressure of the cell vent 12 during the cell event. The second member 302 of the pack cover 30 forms the first distance D1 that is a predetermined height difference with respect to the cell vent 12.

The first elongation range of the first member 301 may be 5 to 28%, and the second elongation range of the second member 302 may be 40 to 120%. The second elongation may be set to 1.4 to 24 times of the first elongation. The second member 302 is configured to form and provide an additional passage 303 the pack cover 30 in the cell event situation due to its high second elongation.

When the first elongation of the first member 301 is lower than 5%, damage to the first member 301 may occur during the event due to insufficient first elongation. When the first elongation of the first member 301 is higher than 28%, formation of the additional passage 303 during an event may be less than required.

When the second elongation of the second member 302 is lower than 40%, in case of an event, the minimum value of the second distance D2 may not be secured, and thereby blockages of the cell vent 12 and thermal runaway may occur due to the discharging of hot gas and the accumulation of foreign substances. When the second elongation of the second member 302 exceeds 120%, the amount of deformation may be maximized, but the manufacturing cost may be excessively increased compared to the increased effect.

In FIG. 4, the additional passage 303 means a space between the solid line state in the normal operation (i.e., before deformation) and the double-dotted line state in the cell event (i.e., after deformation). By the second member 302, the additional passage 303 forms a maximum distance in a second direction (y-axis direction) at a center of the battery cell 10 provided with the cell vent 12. Therefore, the discharge from the cell vent 12 becomes smooth.

The first member 301 may have an upper limit value of the first elongation within a range that does not impair the strength of the pack cover 30, and the second member 302 may have a lower limit value of the second elongation within a range that does not impair the elongation of the pack cover 30. Also, the first and second members 301 and 302 may be set to multiples within a range enabling relative elongation.

For example, the first member 301 may set to have the first elongation range of 5 to 28%, a tensile strength range of 750 to 1,050 Mpa, which means the maximum force applied before being cut, and a yield strength range of 500 to 740 Mpa, which means the maximum force that enables returning to the original state after releasing.

For example, the tensile strength, the yield strength, or the elongation may be determined within the temperature range of 10°C to 60°C, but not limited to this range.

For example, the tensile strength, the yield strength, or the elongation may be determined in the temperature of 25°C, but not limited to this temperature.When the tensile strength of the first member 301 is lower than 750 Mpa, in the case of an event, the first member 301 may be damaged in a state in which the second member 302 is not sufficiently stretched. For example, in a state in which the additional passage 303 is not sufficiently secured, the flame may flow out through the damaged part. Although the higher the tensile strength of the first member 301, the better, but if it exceeds 1,050 Mpa, the material price may increase significantly compared to the increase in effect.

Although the lower the yield strength of the first member 301 is, the more advantageous due to promptly securing the second distance D2 at the time of an event, it may be difficult or require high cost for preparing a material having a large difference between the tensile strength and the yield strength required at the time of the event. When the yield strength of the first member 301 exceeds 740 Mpa, the second distance D2 may not be sufficiently secured during an event.

The second member 302 connected to the first member 301 may have a tensile strength ranging from 1,160 to 1,900 Mpa. A tensile strength of the second member 302 may be higher than the tensile strength of the first member 301. The tensile strength of the second member 302 may be 1.1 to 2.6 times higher than the tensile strength of the first member 301.

A yield strength of the second member 302 may be 200 to 450 Mpa. The yield strength of the second member 302 may be 27 to 90% of the yield strength of the first member 301. For example, in the second member 302 and the first member 301, the difference between the second and first elongations may be 12 to 115%. In the second member 302 and the first member 301, a difference of the yield strength may be 50 to 540 MPa.

The difference 115% of the second and first elongations and the difference in the yield strength 540MPa are maximum differences by which the second member 302 may expand, and may vary depending on the size of the third distance D3. When the third distance D3 is large, the third distance D3 cannot be fully utilized if the difference between the second and first elongations and the difference in the yield strength is small. For example, when the third distance D3 is large, the cost of the second member 302 may increase as the difference of the second and first elongations and the difference in the yield strength increases.

Referring back to FIG. 1 and FIG. 2, the pack cover 30 may be provided with a first non-elongation portion P1 at a center in the second direction (y-axis direction) crossing the first direction (x-axis direction). The first non-elongation portion P1 is formed of the first member 301 having the first elongation and provides strength in the central portion of the pack cover 30.

As an example, the first non-elongation portion P1 may form a maximum width in the second direction (y-axis direction) at the center in the first direction (x-axis direction), and have a width gradually narrowing toward both ends in the first direction (x-axis direction). The first non-elongation portion P1 forming a minimum width is connected to the outer portion P3 of the pack cover 30 provided at both ends in the first direction (x-axis direction).

Since the outer portion P3 does not include the second member 302, it has higher mechanical strength than the portion including the second member 302. Therefore, since the first non-elongation portion P1 is connected to the outer portion P3, mechanical strength of the pack cover 30 may be stably maintained.

For example, the pack cover 30 may be fixed to the pack frame 20 by the fastening member 31, and may further include a second non-elongation portion P2 around the fastening member 31. As an example, the second non-elongation portion P2 is formed of the first member 301 having the first elongation and may stably maintain rigidity between the pack cover 30 and the pack frame 20 by the fastening member 31.

While this disclosure has been described in connection with what is presently considered to be practical embodiments, it is to be understood that the disclosure is not limited to the disclosed embodiments, but, on the contrary, is intended to cover various modifications and equivalent arrangements included within the scope of the appended claims.

**<Description of symbols>**

| | | | |
|---|---|---|---|
| 10: | battery cell | 11: | cap plate |
| 12: | cell vent | 20: | pack frame |
| 21: | pack vent | 30: | pack cover |
| 31: | fastening member | 50: | vehicle cover |
| 301: | first member | 302: | second member |
| 303: | additional passage | D1: | first distance |
| D2: | second distance | D3: | third distance |
| P1: | first non-elongation portion | P2: | second non-elongation portion |
| P3: | outer portion | S: | space |

## Claims

1. A rechargeable battery pack, comprising:
a plurality of battery cells each having a cell vent;
a pack frame configured to accommodate the battery cells and provided with a pack vent; and
a pack cover coupled to the pack frame and configured to cover the battery cells,
wherein the pack cover comprises a first member formed of a first elongation material having a first elongation, and a second member formed of a second elongation material having a second elongation that is larger than the first elongation.

2. The rechargeable battery pack as claimed in claim 1, wherein the pack cover alternately comprises the first member and the second member along a first direction in which the battery cells are stacked.

3. The rechargeable battery pack as claimed in claim 2, wherein the first member and the second member are connected by welding or a clad metal.

4. The rechargeable battery pack as claimed in claim 2 or claim 3, wherein:
the first member is formed of a hot-dip galvanized steel sheet; and
the second member is formed of a stainless steel sheet.

5. The rechargeable battery pack as claimed in any one of claims 1 to 4, wherein the second member is disposed above the cell vent provided in the battery cell.

6. The rechargeable battery pack as claimed in claim 5, wherein the second member of the pack cover forms a first distance that is a predetermined height difference with respect to the cell vent.

7. The rechargeable battery pack as claimed in any one of claims 2 to 6, wherein:
a first elongation range of the first member is 5 to 28%; and
a second elongation range of the second member is 40 to 120%.

8. The rechargeable battery pack as claimed in any one of claims 2 to 6, wherein the second elongation is set to 1.4 to 24 times of the first elongation.

9. The rechargeable battery pack as claimed in any one of claims 2 to 6, wherein the first member is set to have a first elongation range of 5 to 28%, a tensile strength range of 750 to 1,050 Mpa, and a yield strength range of 500 to 740 Mpa.

10. The rechargeable battery pack as claimed in claim 9, wherein the second member has the tensile strength range of 1,160 to 1,900 Mpa.

11. The rechargeable battery pack as claimed in claim 9, wherein a tensile strength of the second member is higher than a tensile strength of the first member.

12. The rechargeable battery pack as claimed in claim 11, wherein the tensile strength of the second member is 1.1 to 2.6 times higher than the tensile strength of the first member.

13. The rechargeable battery pack as claimed in any one of claims 9 to 12, wherein the yield strength range of the second member is 200 to 450 Mpa, optionally wherein a yield strength of the second member is 27 to 90% of a yield strength of the first member.

14. The rechargeable battery pack as claimed in any one of claims 9 to 13, wherein, in the second member and the first member, a difference between the second elongation and the first elongation is 12 to 115%, and a difference of the yield strength is 50 to 540 MPa.

15. The rechargeable battery pack as claimed in any one of claims 2 to 14, wherein:
the pack cover comprises a first non-elongation portion provided at a center in a second direction crossing the first direction, and formed of the first member having the first elongation; and
the first non-elongation portion is configured to form a maximum width in the second direction at the center in the first direction, while having a width gradually narrowing toward both ends in the first direction, optionally wherein:
the pack cover is fixed to the pack frame by a fastening member; and
a second non-elongation portion is formed of the first member having the first elongation around the fastening member.
